# EUROPEAN PATENT SPECIFICATION

(11) **EP 2 452 746 B1**
(45) Date of publication and mention of the grant of the patent: **25.10.2017**
(21) Application number: 10797000.6
(22) Date of filing: 18.06.2010
(51) Int. Cl.: B01J 23/66, B01D 39/14, B01D 53/94, B01J 37/02, B01J 37/04, B01J 37/08, F01N 3/02

(54) **PARTICULATE COMBUSTION CATALYST**
PARTIKELVERBRENNUNGSKATALYSATOR
CATALYSEUR DE COMBUSTION DES PARTICULES

(30) Priority: 06.07.2009 JP 2009160197
(43) Date of publication of application: 16.05.2012
(73) Proprietor: Mitsui Mining and Smelting Co., Ltd., Shinagawa-ku Tokyo 141-8584 (JP)
(72) Inventor: AOKI Akira, Ageo-shi Saitama 362-0021 (JP); ASANUMA Takahito, Ageo-shi Saitama 362-0021 (JP)
(74) Representative: Dossmann, Gérard
(86) International application number: PCT/JP2010/060358
(87) International publication number: WO 2011/004689

(56) References cited:
- EP-A1- 1 932 590
- WO-A1-2009/025173
- JP-A- 2005 007 360
- JP-A- 2005 007 360
- JP-A- 2009 045 584
- JP-B2- 4 144 898
- US-A1- 2003 027 719

## Description

### Technical Field

The present invention relates to a particulate combustion catalyst, to a method for producing the catalyst, to a particulate filter, and to an exhaust gas cleaning apparatus. More particularly, the present invention relates to a particulate combustion catalyst which realizes removal (through oxidation) of particulate matter discharged from a diesel internal combustion engine; to a method for producing the catalyst; to a particulate filter coated with the particulate combustion catalyst; and to an exhaust gas cleaning apparatus including the particulate filter coated with the particulate combustion catalyst.

### Background Art

Exhaust gas discharged from diesel engines contains nitrogen oxides (NOₓ) and particulate matter, and release of such substances into the atmosphere without any treatment is a main cause of air pollution. Therefore, demand has arisen for strict regulation for such substances. There has been proposed, as effective means for removing particulate matter, a flow-through oxidation catalyst for combustion of soluble organic fractions (SOFs), and a diesel exhaust gas trapping system employing a diesel particulate filter (DPF) for trapping soot. However, for regeneration of such a DPF, particulate matter trapped therein must be continuously removed through oxidation.

Hitherto, a variety of continuous regeneration systems have been proposed, and examples thereof include a system employing a catalyst including a carrier made of an inorganic oxide (e.g., zirconium oxide, vanadium oxide, or cerium oxide), and an expensive noble metal (e.g., Pt) supported on the carrier (see, for example, Patent Document 1, 2, or 3); and a continuous regeneration method involving NO₂ (see, for example, Patent Document 4). This continuous regeneration method requires provision, upstream of a DPF, of an oxidation catalyst (e.g., Pt) for oxidizing NO into NO₂, and thus involves high cost. In addition, reaction involving NO₂ is affected by the ratio of NOₓ to C, and many restrictions are imposed on the employment of this method.

There has been proposed a particulate combustion catalyst which exhibits excellent heat resistance, which realizes removal of soot through oxidation at low temperature without employment of an expensive noble metal, and which enables oxidation reaction to proceed with the aid of only oxygen and thus realizes removal of soot through oxidation at low temperature regardless of the NOₓ concentration of exhaust gas. The proposed particulate combustion catalyst is composed of a carrier formed of a cerium-zirconium composite oxide having a cerium oxide content of 5 to 50 mass%, and a first catalyst which is supported on the carrier and which is formed of at least one metal selected from Ag and Ru or an oxide of the metal (see Patent Document 5).

### Prior Art Documents

### Patent Documents

Patent Document 1: Japanese Patent Application Laid-Open (*kokai*) No. H10-047035
Patent Document 2: Japanese Patent Application Laid-Open (*kokai*) No. 2003-334443
Patent Document 3: Japanese Patent Application Laid-Open (*kokai*) No. 2004-058013
Patent Document 4: Japanese Patent No. 3012249
Patent Document 5: Japanese Patent No. 4144898

### Summary of the Invention

### Problems to be Solved by the Invention

An object of the present invention is to provide a particulate combustion catalyst which has durability in use at high temperature (hereinafter referred to as high-temperature durability) more excellent than that of the particulate combustion catalyst disclosed in Patent Document 5, which realizes removal of soot through oxidation at low temperature without employment of an expensive noble metal, and which enables oxidation reaction to proceed with the aid of only oxygen and thus realizes removal of soot through oxidation at low temperature regardless of the NOₓ concentration of exhaust gas. Another object of the present invention is to provide a method for producing the catalyst. Still another object of the present invention is to provide a particulate filter coated with the particulate combustion catalyst. Still another object of the invention is to provide a method for producing the particulate filter. Yet another object of the present invention is to provide an exhaust gas cleaning apparatus comprising the particulate filter coated with the particulate combustion catalyst. Means for Solving the Problems

The present inventors have carried out extensive studies in order to attain the aforementioned objects, and have found that the objects can be attained by employing, as a catalyst component of a particulate combustion catalyst, as defined in claim 1. The present invention has been accomplished on the basis of this finding.

Accordingly, the particulate combustion catalyst of the present invention is characterized by comprising a carrier as defined below, and a catalyst component supported on the carrier and formed of an alloy composed of Ag in an amount of 80 to 30 at.% and at least one noble metal selected from the group consisting of Pd and Pt in an amount of 20 to 70 at.%, the alloy being contained in an amount of 0.5 to 30 parts by mass with respect to 100 parts by mass of the carrier.

The method of the present invention for producing a particulate combustion catalyst is characterized by comprising mixing an aqueous solution containing Ag ions with an aqueous solution containing ions of at least one noble metal selected from the group consisting of Pd and Pt ; adding a powder of a catalyst carrier as defined below to the aqueous solution mixture with stirring, to thereby form a slurry; exsiccating the slurry and drying; and firing the dried product in air at a firing temperature of 700 to 1,000°C for a period of time of [50 - 0.047x(firing temperature)(°C)] (hour) or longer.

The present invention also provides a particulate filter characterized by being coated with any of the aforementioned particulate combustion catalysts. The present invention also provides an exhaust gas cleaning apparatus characterized by comprising a particulate filter coated with any of the aforementioned particulate combustion catalysts.

### Effects of the Invention

The particulate combustion catalyst of the present invention has excellent high-temperature durability, which realizes removal of soot through oxidation at low temperature, and which enables oxidation reaction to proceed with the aid of only oxygen and thus realizes removal of soot through oxidation at low temperature regardless of the NOₓ concentration of exhaust gas.

### Brief Description of the Drawings

[Fig. 1] A graph showing the relationship between the Pd content of the particulate combustion catalyst and combustion initiation temperature (Tig).
[Fig. 2] A graph showing the relationship between the Pd content and XRD peak shift of the particulate combustion catalyst after thermal treatment at various temperature.
[Fig. 3] A chart showing a change in diffraction peak (peak shift).

### Modes for Carrying Out the Invention

The particulate combustion catalyst of the present invention employs, as a catalyst component, an alloy composed of Ag and at least one noble metal selected from the group consisting of Pd and Pt, namely an alloy composed of Ag and Pd and/or Pt, in order to lower the combustion initiation temperature. When the alloy contains at least one noble metal selected from the group consisting of Pd and Pt in an amount or amounts less than 20 at.% or in excess of 85 at.%, the combustion initiation temperature is not sufficiently lowered. Thus, the catalyst component is an alloy composed of 80 to 30 at. %of Ag and 20 to 70 at.% of at least one noble metal selected from the group consisting of Pd and Pt. In order to reduce the amount of expensive noble metal so as to reduce production cost, the alloy is preferably composed of 80 to 65 at.% of Ag and 20 to 35 at.% of noble metal. Notably, when Pd is used as a noble metal, the effect of firing particulates at low temperature is most fully attained.

The particulate combustion catalyst of the present invention contains an alloy serving as the catalyst component in an amount of 0.5 to 30 parts by mass with respect to 100 parts by mass of the carrier, more preferably 0.5 to 15 parts by mass (mass%). When the amount of alloy with respect to that of the carrier is less than 0.5 mass%, the catalytic effect is not sufficiently attained, whereas when the amount is in excess of 30 mass%, the catalytic activity (per unit mass) of the supported alloy tends to decreases.

The particulate combustion catalyst of the present invention may employ any of the carriers which are generally employed as carriers of particulate combustion catalysts containing Ag as a catalyst component. However, preferably employed is a carrier which attains high-speed transfer of oxygen therefrom and combustion of particulates at high efficiency. Examples of such carries include CeO₂-ZrO₂ and ZrO₂. Of these, CeO₂-ZrO₂ is used in the invention.

In the CeO₂-ZrO₂ carrier used in the particulate combustion catalyst of the present invention, the CeO₂ content of the composite oxide is 5 to 50 mass%. When the CeO₂ content is in excess of 50 mass%, the specific surface area of the carrier decreases at high temperature (e.g., 700°C or higher), in some cases, eventually causing thermal deterioration of the catalyst, whereas when CeO₂ content is less than 5 mass%, the catalyst may be thermally deteriorated in some cases.

The carrier of the particulate combustion catalyst of the present invention is formed of a CeO₂-ZrO₂-based composite oxide containing at least one metal selected from among Nd, La, and Pr. By virtue of the presence of these metallic elements, the carrier formed of the CeO₂-ZrO₂-based composite oxide exhibits improved thermal stability and improved oxidation performance at low temperature. In order to fully attain these effects, the amount of oxide containing at least one metal selected from among Nd, La, Y and Pr must be 1 mass% or more. However, when the amount of metal oxide is in excess of 35 mass%, the relative amounts of CeO₂ and ZrO₂ decrease, and the performance of the carrier formed of the CeO₂-ZrO₂-based composite oxide is likely to be impaired. Therefore, the carrier employed in the catalyst is a CeO₂-ZrO₂-based composite oxide having an amount of oxide containing at least one metal selected from among Nd, La, Y; and Pr (the total amount in the case where a plurality of metal oxides are present) of 1 to 35 mass% and a CeO₂ content of 5 to 50 mass%.

One embodiment of the method of the present invention for producing a particulate combustion catalyst is as follows. Firstly, an aqueous solution containing Ag ions (e.g., aqueous silver nitrate solution) and an aqueous solution containing ions of at least one noble metal selected from the group consisting of Pd and Pt (e.g., aqueous palladium nitrate solution, dinitrodiamine-Pt nitrate solution, or aqueous platinum chloride solution) were mixed at such a ratio that the amount of Ag is adjusted to 80 to 30 at.% and the amount of at least one noble metal selected from the group consisting of Pd and Pt is adjusted to 20 to 70 at.%. To the aqueous solution mixture, the aforementioned carrier powder is added in such an amount that the total metal amount of the catalyst component(s) with respect to 100 parts by mass of the carrier is adjusted to 0.5 to 30 parts by mass, and the mixture is stirred, to thereby form a slurry. The slurry is exsiccated and further dried at a specific temperature (e.g., 120°C). The dried product is fired in air at 700 to 1,000°C, preferably 800 to 950°C for a period of time of [50 - 0.047x(firing temperature)(°C)] (hour) or longer. Through the procedure, alloying of Ag with at least one noble metal selected from the group consisting of Pd and Pt is completed. The firing time is [50 - 0.047x(firing temperature)(°C)] (hour) or longer, and preferably 10 to 30 hours, more preferably 15 to 25 hours. The firing time [50 - 0.047x(firing temperature)(°C)] (hour) or longer, defined in the present invention, has been derived from a large number of times of experiments.

In the particulate combustion catalyst of the present invention employing the aforementioned alloy serving as a catalyst component, the XRD peak of the catalyst is preferably shifted by 0.45° or more from the XRD peak of a particulate combustion catalyst employing Ag as a sole catalyst component. The shift of the XRD peak of the particulate combustion catalyst [shift of the peak attributed to Ag(111)] is an index for the degree of formation of solid solution in the alloy or the degree of alloying. As is clear from the description hereinbelow, the shift varies depending on the alloy composition and the thermal treatment temperature (firing temperature).

In consideration that the particulate filter of the present invention is produced by causing the particulate combustion catalyst of the present invention to be held on a base, preferably, the surface of the carrier is provided with a binder component such as SiO₂, TiO₂, ZrO₂, or Al₂O₃. When such a binder component is provided on the surface of the carrier, adhesion between the base and the carrier is enhanced, and the catalyst exhibits improved durability and heat resistance.

The particulate filter of the present invention may assume any known form of particulate filter, but preferably has a three-dimensional structure. Specific examples of filters having a three-dimensional structure include a wall-through filter, a flow-through honeycomb filter, a wire mesh filter, a ceramic fiber filter, a metallic porous filter, a particle-charged filter, and a foam filter. Examples of the material of the base include ceramic materials such as cordierite and SiC; Fe-Cr-Al alloys; and stainless steel alloys.

The exhaust gas cleaning apparatus of the present invention, which includes therein the aforementioned particulate filter of the present invention, will be readily appreciated by those skilled in the art.

### Examples

The present invention will next be described in detail with reference to Examples and Comparative Examples. In each of the Examples and Comparative Examples, a parenthesized numerical value following each of the oxides forming a composite oxide (i.e., carrier) represents the amount (mass%) of the constitutive oxide with respect to the entirety of the composite oxide.

### Examples 1 to 5, and Comparative Examples 1 to 4

To a catalyst component solution having a metal element content of 5 mass% (with respect to the mass of carrier), water (30 g), and the mixture was stirred to thereby form an aqueous solution. The employed catalyst component solutions are as follows: aqueous silver nitrate solution (Comparative Example 1), solution mixture of aqueous silver nitrate solution and aqueous palladium nitrate solution (Ag : Pd = 95 : 5 (atomic)) (Comparative Example 2), solution mixture of aqueous silver nitrate solution and aqueous palladium nitrate solution (Ag : Pd = 90 : 10 (atomic)) (Comparative Example 3), solution mixture of aqueous silver nitrate solution and aqueous palladium nitrate solution (Ag : Pd = 80 : 20 (atomic)) (Example 1), solution mixture of aqueous silver nitrate solution and aqueous palladium nitrate solution (Ag : Pd = 70 : 30 (atomic)) (Example 2), solution mixture of aqueous silver nitrate solution and aqueous palladium nitrate solution (Ag : Pd = 50 : 50 (atomic)) (Example 3), solution mixture of aqueous silver nitrate solution and aqueous palladium nitrate solution (Ag : Pd = 30 : 70 (atomic)) (Example 4), solution mixture of aqueous silver nitrate solution and aqueous palladium nitrate solution (Comparative Example 4), and solution mixture of aqueous silver nitrate solution and dinitrodiamine-Pt nitrate solution (Ag : Pd = 80 : 20 (atomic)) (Example 5). To each of the thus-prepared solutions, a powder of a composite oxide (CeO₂(21) + ZrO₂(72) + La₂O₃(2) + Nd₂O₃(5)) (5.0 g) was added, and the mixture was stirred for 30 minutes, to thereby form a slurry. The thus-formed slurry was exsiccated to dryness and further dried at 120°C for 3 hours. Subsequently, the dried product was fired in air at 800°C for 20 hours. Thus thus-yielded particulate combustion catalyst was found to have a catalyst metal content of 5 mass% with respect to the mass of carrier.

### <Evaluation of combustion initiation temperature of particulate combustion catalysts having various Pd contents>

The Tig (combustion initiation temperature) of each particulate combustion catalyst powder produced in Examples 1 to 4 and Comparative Examples 1 to 4 was measured through the following method.

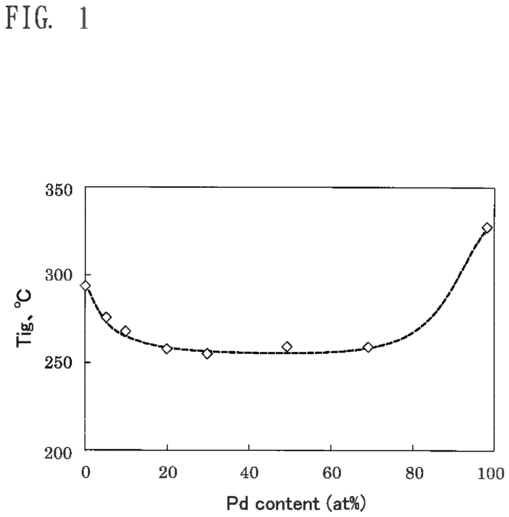

Each particulate combustion catalyst powder (20 mg) produced in Examples 1 to 4 and Comparative Examples 1 to 4 and carbon (2 mg) (Printex-V (toner carbon), product of Degussa) were mixed for 15 seconds by means of a mortar agate. The mixture was fixed at a center portion of a quartz-made reaction tube by use of quartz wool. While a circulation gas having the below-described composition was caused to flow through the quartz reaction tube at the below-described flow rate, the temperature of the reaction tube was elevated at the below-described temperature elevation rate by means of an electric furnace, and CO and CO₂ concentrations were measured at the outlet of the reaction tube by means of an infrared analyzer. The temperature as measured at the inlet of the catalyst-containing reaction tube when CO₂+CO concentration reached 30 ppm (i.e., electric furnace control temperature) was regarded as Tig. Fig. 1 shows the combustion initiation temperatures of the particulate combustion catalyst powders.
Gas composition: O₂: 10%, N₂: balance
Flow rate: 400 cc/min
Temperature elevation rate: 10 degrees (°C)/min

As is clear from the graph of Fig. 1, an alloy composed of 80 to 30 at.% of Ag and 20 to 70 at. % of at least one noble metal selected from the group consisting of Pd and Pt is employed as a catalyst component.

### <Evaluation of combustion initiation temperature of particulate combustion catalysts treated at various temperatures>

The procedure of producing particulate combustion catalyst powders of Example 1, Comparative Example 1, and Example 5 was repeated, except that the firing temperature was changed to 800°C, 900°C, and 1,000°C, to thereby form catalyst powders. In a similar manner, the combustion initiation temperature (Tig) of each catalyst powder was measured. The combustion initiation temperatures of the particulate combustion catalyst powders are shown in Table 1.
[Table 1]

**Table 1 (Tig temp.)**

| Firing temp. | 800°C | 900°C | 1,000°C |
|---|---|---|---|
| Ag | 294°C | 298°C | 323°C |
| Ag-20 at.% Pd | 265°C | 284°C | 293°C |
| Ag-20 at.% Pt | - | - | 306°C |

As is clear from Table 1, when an alloy of Ag 80 at.% and Pd 20 at.% or an alloy of Ag 80 at.% and Pt 20 at.% was employed as a catalyst component, high-temperature durability of the catalyst is more effectively improved, as compared with the case where Ag is employed as a sole catalyst component.

### <Evaluation of XRD peak shift of particulate combustion catalysts having various Pd contents or treated at various temperatures>

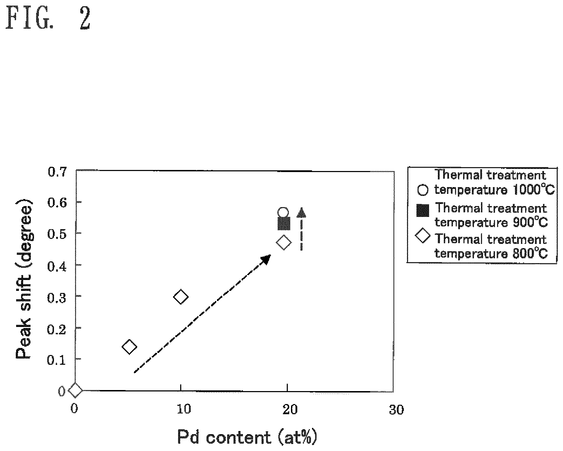

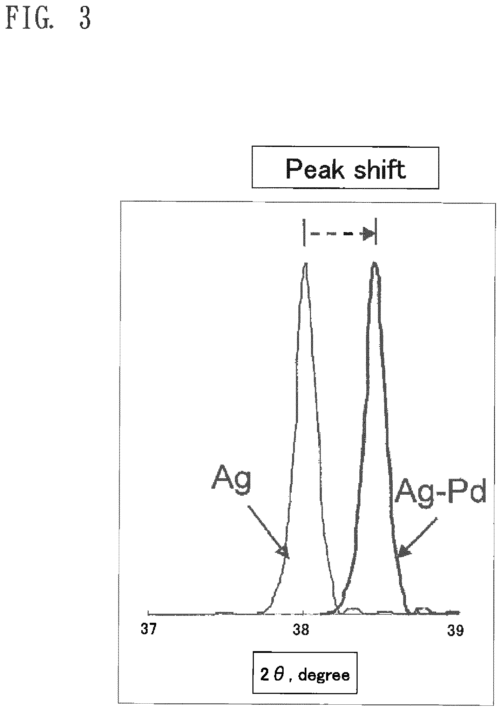

The particulate combustion catalysts having a Pd content of 5 at.%, 10 at.%, or 20 at.% and treated at 800°C; the particulate combustion catalysts having a Pd content of 20 at.% and treated at 900°C; and the particulate combustion catalysts having a Pd content of 20 at.% and treated at 1,000°C were analyzed in terms of shift of XRD peak [the peak attributed to Ag(111)] (the degree of formation of solid solution in the alloy or the degree of alloying). Fig. 2 shows the peak shifts of the respective particulate combustion catalyst powders. The mode of shifting the peak is shown in Fig. 3. Preferably, alloying is performed such that the XRD peak of the catalyst component of the aforementioned alloy is increased by about 0.45° or more from that of the catalyst component employing Ag as a sole catalyst component.

As is clear from the graph of Fig. 2, the peak shift increases as the Pd content increases and as the thermal treatment temperature is elevated, indicating that solid solution formation or alloying is promoted.

## Claims

1. A particulate combustion catalyst, **characterized by** comprising a carrier, and a catalyst component supported on the carrier and formed of an alloy composed of Ag in an amount of 80 to 30 at.% and at least one noble metal selected from the group consisting of Pd and Pt, in an amount of 20 to 70 at.%, the alloy being contained in an amount of 0.5 to 30 parts by mass with respect to 100 parts by mass of the carrier, wherein:
the carrier is a ZrO₂-CeO₂ based-composite oxide having an amount of oxide containing at least one metal selected from among Nd, La, Y, and Pr, of 1 to 35 mass%, and the CeO₂ content of the composite oxide is 5 to 50 mass %.

2. A method for producing a particulate combustion catalyst as recited in claim 1, **characterized in that** the method comprises:
mixing an aqueous solution containing Ag ions with an aqueous solution containing ions of at least one noble metal selected from the group consisting of Pd and Pt ;
adding a powder of a catalyst carrier which is a ZrO₂-CeO₂ based-composite oxide having an amount of oxide containing at least one metal selected from among Nd, La, Y, and Pr, of 1 to 35 mass%, and the CeO₂ content of the composite oxide is 5 to 50 mass %, to the aqueous solution mixture with stirring, to thereby form a slurry;
exsiccating the slurry and drying; and
firing the dried product in air at a firing temperature of 700 to 1,000 °C for a period of time of [50 - 0.047x(firing temperature) (°C)] (hour) or longer.

3. A particulate filter **characterized by** being coated with a particulate combustion catalyst as recited in claim 1.

4. An exhaust gas cleaning apparatus **characterized by** comprising a particulate filter coated with a particulate combustion catalyst as recited in claim 1.

## Patentansprüche

1. Partikelverbrennungskatalysator, **dadurch gekennzeichnet, dass** er einen Träger und eine Katalysatorkomponente umfasst, die auf dem Träger geträgert und aus einer Legierung gebildet ist, die aus Ag in einer Menge von 80 bis 30 At.-% und mindestens einem Edelmetall, ausgewählt aus der Gruppe, bestehend aus Pd und Pt, in einer Menge von 20 bis 70 At.-% zusammengesetzt ist, wobei die Legierung, bezogen auf 100 Masseteile des Trägers, in einer Menge von 0,5 bis 30 Masseteilen enthalten ist, wobei:
der Träger ein Mischoxid auf Basis von ZrO₂-CeO₂ ist, das eine Oxidmenge, die mindestens ein Metall enthält, das aus Nd, La, Y und Pr ausgewählt ist, von 1 bis 35 Masse-% aufweist und wobei der CeO₂-Gehalt des Mischoxids 5 bis 50 Masse-% beträgt.

2. Verfahren zum Herstellen eines Partikelverbrennungskatalysators nach Anspruch 1, **dadurch gekennzeichnet, dass** das Verfahren umfasst:
Mischen einer wässrigen Lösung, die Ag-Ionen enthält, mit einer wässrigen Lösung, die Ionen von mindestens einem Edelmetall, ausgewählt aus der Gruppe, bestehend aus Pd und Pt, enthält;
Zugeben eines Pulvers eines Katalysatorträgers, der ein Mischoxid auf Basis von ZrO₂-CeO₂ ist, das eine Oxidmenge, die mindestens ein Metall enthält, das aus Nd, La, Y und Pr ausgewählt ist, von 1 bis 35 Masse-% aufweist und wobei der CeO₂-Gehalt des Mischoxids 5 bis 50 Masse-% beträgt, unter Rühren zu der wässrigen Lösungsmischung, um dadurch eine Aufschlämmung zu bilden;
Austrocknen der Aufschlämmung und Trocknen; und
Brennen des getrockneten Produktes an der Luft bei einer Brenntemperatur von 700 bis 1.000 °C während eines Zeitraums von [50 - 0,047 x (Brenntemperatur) (°C)] (Stunden) oder länger.

3. Partikelfilter, **dadurch gekennzeichnet, dass** er mit einem Partikelverbrennungskatalysator nach Anspruch 1 beschichtet ist.

4. Abgasreinigungsvorrichtung, **dadurch gekennzeichnet, dass** sie einen Partikelfilter, der mit einem Partikelverbrennungskatalysator nach Anspruch 1 beschichtet ist, umfasst.

## Revendications

1. Catalyseur de combustion pour particules, **caractérisé en ce qu'**il comprend un support et un composant catalyseur supporté par ce support et constitué d'un alliage composé d'argent, présent en une proportion de 80 à 30 % en atomes, et d'au moins un métal noble choisi dans l'ensemble constitué du palladium et du platine, présent en une proportion de 20 à 70 % en atomes, lequel alliage y est contenu en une quantité de 0,5 à 30 parties en masse pour 100 parties en masse du support,
et dans lequel le support est un oxyde composite à base de ZrO₂-CeO₂, qui contient de 1 à 35 % en masse d'oxyde(s) d'au moins un métal choisi parmi les néodyme, lanthane, yttrium et praséodyme, et la proportion de CeO₂ dans cet oxyde composite vaut de 5 à 50 % en masse.

2. Procédé de production d'un catalyseur de combustion pour particules tel que présenté dans la revendication 1, lequel procédé est **caractérisé en ce qu'**il comporte les étapes suivantes :
- mélanger une solution aqueuse contenant des ions d'argent avec une solution aqueuse contenant des ions d'au moins un métal noble choisi dans l'ensemble constitué du palladium et du platine ;
- ajouter à ce mélange de solutions aqueuses, tout en agitant celui-ci, un support de catalyseur en poudre, qui est un oxyde composite à base de ZrO₂-CeO₂, contenant de 1 à 35 % en masse d'oxyde(s) d'au moins un métal choisi parmi les néodyme, lanthane, yttrium et praséodyme et présentant une teneur en CeO₂ de 5 à 50 % en masse, pour en faire une suspension ;
- éliminer l'eau de la suspension et faire sécher le résidu ;
- et calciner le produit séché, dans l'air et à une température de calcination de 700 à 1000 °C, durant un laps de temps égal ou supérieur, en heures, à 50 moins 0,047 fois la température de calcination en degrés Celsius.

3. Filtre à particules, **caractérisé en ce qu'**il est revêtu d'un catalyseur de combustion pour particules tel que présenté dans la revendication 1.

4. Dispositif de nettoyage de gaz d'échappement, **caractérisé en ce qu'**il comporte un filtre à particules revêtu d'un catalyseur de combustion pour particules tel que présenté dans la revendication 1.
